Europäisches Patentamt

European Patent Office

Office européen des brevets

(19)

(11) **EP 0 985 995 B1**

(12) **EUROPEAN PATENT SPECIFICATION**

(45) Date of publication and mention
of the grant of the patent:
**13.08.2003 Bulletin 2003/33**

(51) Int Cl.[7]: **G06F 1/00**

(21) Application number: **98117083.0**

(22) Date of filing: **09.09.1998**

(54) **Method and apparatus for intrusion detection in computers and computer networks**

Verfahren und Vorrichtung zur Eindringdetektion in Rechnern und Rechnernetzen

Procédé et appareil de détection d'intrusion dans des ordinateurs et des réseaux d'ordinateurs

(84) Designated Contracting States:
**DE FR GB**

(43) Date of publication of application:
**15.03.2000 Bulletin 2000/11**

(73) Proprietor: **International Business Machines
Corporation
Armonk, NY 10504 (US)**

(72) Inventors:
• **DACIER, Marc C.**
**8134 Adliswil (CH)**
• **DEBAR, Hervé C.**
**8134 Adliswil (CH)**
• **WESPI, Andreas A.**
**8155 Nettmenhasli (CH)**
• **FLORATOS, Aris**
**Long Island City, New York 11106 (US)**
• **RIGOUTSOS, Isidore**
**Astoria, New York 11103 (US)**

(74) Representative: **Williams, Julian David
International Business Machines Corporation
Säumerstrasse 4/Postfach
8803 Rüschlikon (CH)**

(56) References cited:
**US-A- 5 621 889**

• **DENAULT S ET AL: "INTRUSION DETECTION:
APPROACH AND PERFORMANCE ISSUES OF
THE SECURENET SYSTEM" COMPUTERS &
SECURITY INTERNATIONAL JOURNAL
DEVOTED TO THE STUDY OF TECHNICAL AND
FINANCIAL ASPECTS OF COMPUTER
SECURITY, vol. 13, no. 6, 1 January 1994, pages
495-508, XP000478665**
• **I.RIGOUTSOS ET AL: "Combinatorial Pattern
Discovery in Biological Sequences: The
TEIRESIAS Algorithm" BIOINFORMATICS, vol.
14, no. 1, 1998, pages 55-67, XP002094907**
• **COOK J E ET AL: "AUTOMATING PROCESS
DISCOVERY THROUGH EVENT-DATA
ANALYSIS" PROCEEDINGS OF THE 17TH.
ANNUAL CONFERENCE ON SOFTWARE
ENGINEERING, SEATTLE, APR. 23 - 30, 1995, no.
CONF. 17, 23 April 1995, pages 73-82,
XP000545655 ASSOCIATION FOR COMPUTING
MACHINERY**

## Description

## Technical Field

This invention relates to intrusion detection, i. e. the detection of security problems in a computer network or on any computer within said network. It is particularly suited to detect outsiders trying to break into a computer system (e.g. via the net) and/or to detect insiders misusing the privileges they have received (e.g. someone internal reading confidential data that he/she is not entitled to). In brief, the invention uses a behavior-based approach for a pattern-oriented intrusion detection system.

## Background of the Invention

Generally, an intrusion detection system dynamically monitors actions that are taken in a given environment and decides whether these actions are symptomatic of an attack or constitute a legitimate use of the environment.

Essentially, two main intrusion detection methods are known. The first method uses the knowledge accumulated about attacks and looks for evidence of their exploitation. This method is referred to as *knowledge-based*. The second method builds a reference model of the usual behavior of the system being monitored and looks for deviations from the observed usage. This method is referred to as *behavior-based*.

In the knowledge-based approach, the underlying assumption is that the system knows all possible attacks. There is some kind of a *signature* for each attack and the intrusion detection system searches for these signatures when monitoring the traffic. E.g., one may monitor the audit trails on a given machine, the packets going onto the net, etc. This first approach is addressed and described by Shieh et al. in US patent 5 278 901, which also gives a good overview over the technology. An advantage of this method is that no or only few false alarms are generated, i.e. the false alarm rate is low; the main disadvantage is that only those attacks can be located that are already known. Any newly developed intrusion attack would usually remain undetected since its signature is still unknown and thus the system does not search for it.

Unfortunately, there are nowadays so many attacks that the set of signatures is growing very fast. Also, some signatures are difficult to express and an algorithm to search for them can be rather time-consuming. Nevertheless, this approach has proven its usefulness and there are products using this approach available on the market: NetRanger by Cisco Systems, Inc., and RealSecure by Internet Security Systems, Inc., are two examples of such available products.

The second, the behavior-based, approach starts from the assumption that if an attack is carried out against a system, its "behavior" will change. Therefore, the approach is to define a kind of *normal profile* of a system and watch for any deviation from this defined normal profile. Different techniques can be applied (e. g. statistics, rule-based systems, neural networks) using different targets (e.g. the users of the system, the performances of the network, the CPU cycles, etc...). The main advantage of this method over the knowledge-based one is that the attacks do not need to be known in advance, i.e. that unknown attacks can be detected. Thus, the detection remains up-to-date without having to update some database of known signatures. But there are disadvantages: deviations can occur without any attack (e.g. changes in the activity of the user, new software installed, new machines, new users, etc.). Therefore, all known efforts in this direction have been facing a rather high rate of false alarms. There appears to be only one product on the market using this approach: CMDS by Science Applications International Corporation.

In "A Sense of Self for Unix Processes" by S. Forrest et al., Proceedings of the 1996 IEEE Symposium on Security and Privacy, pp. 120-128, Oakland, California, May 1996, it is described how to model the behavior of the "*sendmail daemon*", i.e. a program running permanently in the background without user interaction, using the sequences of system calls that this program generates while running. The idea is to build a table of all the sequences of a given fixed length (here 5, 6, and 11) of consecutive system calls that could be found when watching such a *sendmail daemon* running. The claim was that if one tries to take advantage of a vulnerability in the *sendmail* code, then this would generate a sequence of systems calls not found in a "normal" table, i.e. a table generated from a sample with normal behavior. However, when experimenting with this approach, one discovers that the table necessary can become fairly large. It must be stressed that all the sequences of system calls in this table have the same length, i.e. lengths of 5, 6, and 11. It has been shown in "Fixed vs. Variable-Length Patterns for Detecting Suspicious Process Behavior" by H. Debar, M. Dacier, M. Nassehi, and A. Wespi, Proceedings of ESORICS 98, Louvain-la-Neuve, Belgium, September 1998, that when trying to find what the best length for the sequences is ("best" meaning producing the shortest table of patterns while covering all possible sequences) the result is that the "best" length is 1. This means that the system does not search for unseen sequences but for unseen system calls. The consequence is that if an attack does not use any unseen system call it will not be detected. This is generally unacceptable since it may be possible to run an attack without using a previously unseen system call.

There are two classes of information sources for intrusion detection systems as described in "Towards a Taxonomy of Intrusion Detection Systems" by H. Debar, M. Dacier, and A. Wespi, IBM Research Report 3030, June 1998. Based on the location from where the information can be retrieved, it is differentiated between host-based and network-based intrusion detection systems. Examples of host-based information sources are the so-called *C2 audit trails,* the *syslog* files known in the UNIX operating system, or the *event logs* in Windows NT. Network-based information is mainly retrieved by analyzing the network packets.

As will be described in detail further below, the present invention relates to behavior-based intrusion detection using host-based information sources. For a given process, the intrusion detection system decides whether the process behavior can be judged as normal or abnormal. Abnormal behavior is an indication of an intrusion.

As mentioned above, Forrest et al. describe in "A Sense of Self for UNIX Processes", Proceedings of the 1996 IEEE Symposium on Security and Privacy, pp. 120 - 128, Oakland, California, May 1996, a process model using a set of fixed-length patterns. These patterns correspond to all the possible patterns that can be found in the event sequences recorded during the training phase.

This poses a problem since a careful look at the sequences of audit events that can be generated by the so-called *ftp daemon* running under AIX shows that there are very long subsequences which repeat frequently. For example, many process instantiations start with an identical subsequence that has a length of 40 audit events. Thus, since the described fixed-length approach does not consider such a characteristic, any result of an intrusion detection method based on such a fixed-length approach is distorted and certain intrusions and/or misuses cannot be detected.

In "Intrusion Detection via System Call Traces" by A.P. Kosoresow and S.A. Hofmeyr, IEEE Software, pp. 35 - 42, Sep./Oct. 1997, it is shown that variable-length patterns can be used to model the normal behavior of a process. However, the patterns presented in this publication were constructed manually due to the lack of an automated method. It is obvious that such a manual selection or design of the patterns is inadequate for an automatic intrusion detection of the kind here approached.

A significantly different approach for a pattern-oriented intrusion detection system is disclosed in US Patent 5 278 901 to Shieh et al. It shows an intrusion detection system based on object privilege and information flow, i.e. does not use the deviation from a "typical" activity profile as described above. The approach by Shieh at al. is a knowledge-based intrusion detection system which is in contrast to the behavior-based approach of the present invention. Furthermore, the Shieh patent covers mainly the problem of detecting violations against previously defined access control policies while the present invention aims at detecting any type of attacks. The complexity of the solution chosen in the Shieh patent, however, makes this approach unsuitable to solve the problems which the present invention addresses.

To summarize, it is an object of the present invention to provide a simple and reliable method and apparatus for the detection of intrusions into a computer system, based on event patterns and particularly directed to detect deviations from a "normal" process behavior, and thus to detect attacks performed against said process. A more specific object is to generate, preferably automatically, so-to-speak "natural" patterns for the description of the process behavior and thus produce a very condensed resulting pattern table. Another specific object is to allow the use of highly efficient pattern matching algorithms, especially by producing a relatively small pattern matching table. A further specific object is to produce a pattern table with most representative patterns, independent of their length. A still further specific object is to produce a pattern table with less but longer entries than tables obtained with known approaches and thus improve the detection of attacks. A still further object is to define rules that specify when a deviation from the normal behavior is significant enough to raise an alarm.

## Summary of the Invention

It appears that the idea of having sequences investigated is very important, but that building fixed length sequences is leading to unsatisfactory results, at least when these sequences do not exceed a certain minimal length. Therefore, the invention uses a new approach by focusing on a novel algorithm, the Teiresias algorithm, as described by I. Rigoutsos and A. Floratos in "Combinatorial Pattern Discovery in Biological Sequences - The TEIRESIAS Algorithm" in BioInformatics, pp. 55-67, Vol. 14, No. 1, 1998. This algorithm is also the subject of US patent 6 108 666 to Floratos et al.

The Teiresias algorithm, developed for a different purpose and never considered for intrusion detection, is used to search for *patterns*, i.e. all the subsequences that appear at least twice in a set of input sequences. Though there are other algorithms besides Teiresias that solve the problem of discovering all patterns, none of them is as efficient and fast as the Teiresias algorithm. Generally speaking, the results achieved with the Teiresias algorithm are far superior to anything produced by the prior art approaches.

A particular advantage is that, using the Teiresias algorithm, the longest patterns in a set of input sequences can be found. This is important since a table of long patterns appears to be more "representative" of a specific process than a table of short patterns. Since longer patterns usually contain more context information, it appears that they are more significant for a process than short patterns. On the other hand, short patterns are not necessarily unique for a specific process, but may appear in other processes. It is even possible that short patterns are part of an attack. The longer a pattern is, the lower is the probability that this pattern is part of other processes or even an attack. Consequently, it was found that there are attacks that can be detected with the new technique according to the present invention, which attacks remained undetected with other techniques.

A further advantage is that, obviously, a small pattern table allows to implement efficient pattern matching algorithms and still works reasonably fast. Both advantages lead to an improved detection of attacks.

To summarize, the present invention provides a method and a system for reliably detecting intrusion patterns, thereby minimizing the probability of false alarms.

The method and apparatus for an intrusion detection system according to the invention, using the described variable-length approach when investigating event patterns, operates in two modes, a *training mode* and an *operation mode.*

In the training mode, generally speaking, the behavior of a process is defined based on the system events it generates. System events are either the system calls that are invoked by the process or the audit events generated on behalf of the process. The process model is a table of patterns, i.e. sequences or subsequences of events, which are representative of the process examined. To get a complete picture of the process, it is important that as many different event sequences as possible are generated and analyzed.

In this training mode, variable-length patterns are retrieved from the event sequences generated by or on behalf of the process. All events of a specific type generated from the invocation of the process until its end constitute an *event sequence.* Different process invocations may result in different event sequences. *Patterns* are subsequences of the event sequences; patterns that are characteristic for the process are stored in a *pattern table.* The pattern table represents the process model.

In the operation mode of the present invention, it is decided whether the event streams created on behalf of the process can be matched by the patterns in the pattern table, which corresponds to a normal process behavior, or whether there are subsequences of unmatched events. Unmatched events represent a deviation from the normal behavior and may thus indicate an intrusion or misuse, called an *attack*. Significant deviations result in raising an alarm.

As already mentioned, the present invention is advantageous because patterns are generated that are "natural" for the description of the process behavior. The use of variable-length patterns to build the set of representative patterns results in a pattern table with less, but longer entries than tables obtained with other approaches. As explained, longer patterns contain more context information and are therefore more representative for a particular process than short patterns. Furthermore, a small pattern table increases the speed of the detection process. It is obvious that, when looking for a pattern that matches part of a given sequence, searching in a small set of patterns is faster than in a large set. Therefore, small pattern tables allow to speed up the pattern matching process.

The invention is defined according to claims 1 (method) and 10 (apparatus).

## Brief Description of the Drawings

The foregoing and other features and advantages of the invention will be apparent from the following more detailed description of a preferred embodiment of the invention, as illustrated in the accompanying drawings, in which:

Figure 1    shows the components of an intrusion detection system according to the invention, based on the analysis of event patterns;

Figure 2    is a sample output of the Event Recording component;

Figure 3    is a sample output of the Process Filtering component;

Figure 4    is a sample output of the Translation component;

Figure 5    is a sample output of the Reduction and Aggregation component;

Figure 6    shows the patterns as detected by the Teiresias algorithm for a set of sample input strings;

Figure 7    is an illustration of the pattern reduction algorithm applied to the sample string set introduced in Figure 6;

Figure 8    is an illustration of the pattern matching algorithm for a case where the input string can be covered; and

Figure 9    is an illustration of the pattern matching algorithm for a case where the input string cannot be completely covered.

## Detailed Description of the Invention

In the following first section, the components of the intrusion detection system are described. In a subsequent second section, the algorithms used in selected components are discussed.

*1. The Intrusion Detection System and its Components*

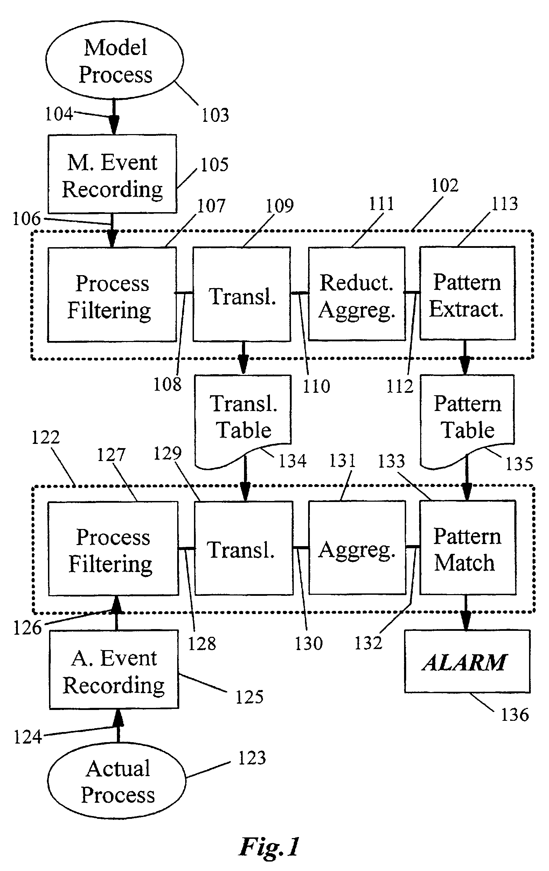

Figure 1 shows the components of the intrusion detection system. The system consists of two parts: an off-line part and an on-line part. The off-line part represents the training phase or mode, and the on-line part the real operation or operation mode. In the training mode, a model of the normal behavior of the process examined is generated. In the operation mode, the instantiations of the process under the observation of the intrusion detection system are compared to the process model and, if a significant deviation is observed, an alarm 136 is raised.

A process execution 103 can trigger different types of events 104. Either one of the following two event sources can be used for the present invention:

- C2 audit events as they are recorded by the auditing system available on most UNIX and some other operating systems.
- System calls as they are recorded by programs coming with the operating system, e.g. strace, or by other system utilities.

It has to be noted that the two sources cannot be used interchangeably. Either audit events or system calls have to be considered. Any further use of the term *event* in this document may relate to audit events as well as system calls.

In the off-line part, it is possible to influence the process invocation in order to exercise as many different process execution paths as possible. For this purpose, we use the functional verification tests (FVT) as they are used by software developers to test all the different subcommands that can be executed by a process.

Other approaches would be to define manually a set of subcommands that are expected to cover all the process execution paths, or to just record the events of the process running in a real environment.

The events generated on behalf of a process are recorded by an event recording component 105. Event recording component 105 may not only record events by the process examined but also by other processes in the system. E.g. the auditing system does only allow to collect the audit events on a system level, i.e. either for all processes or for none. An event is described by several attributes, e.g. the process name, the event name, the process id, the parent process id, or the user id.

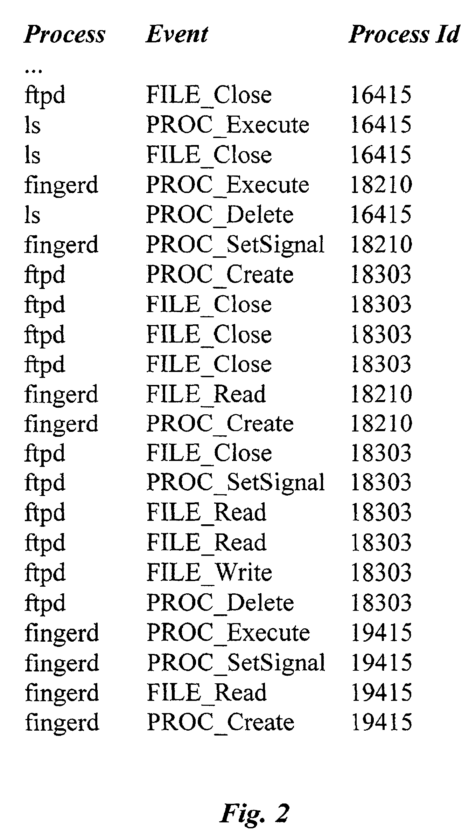

Event recording component 105 forwards the events to training system 102. Events are forwarded as triples comprising process name, event name, and process id, labeled 106. Figure 2 shows a sample of the events that are sent from event recording component 105 to a filtering component 107 in training system 102. Filtering component 107 first groups together the events belonging to the same process by keeping the chronological order of the events. All events belonging to the same process are called an *event sequence.* An event sequence consists of an unique *identifier* and a *list of events.* The events are given as tuples comprising the process and the event name. Not all event sequences are needed for the further processing. Only those sequences which are needed to analyze the behavior of the examined process are forwarded to a translation component 109.

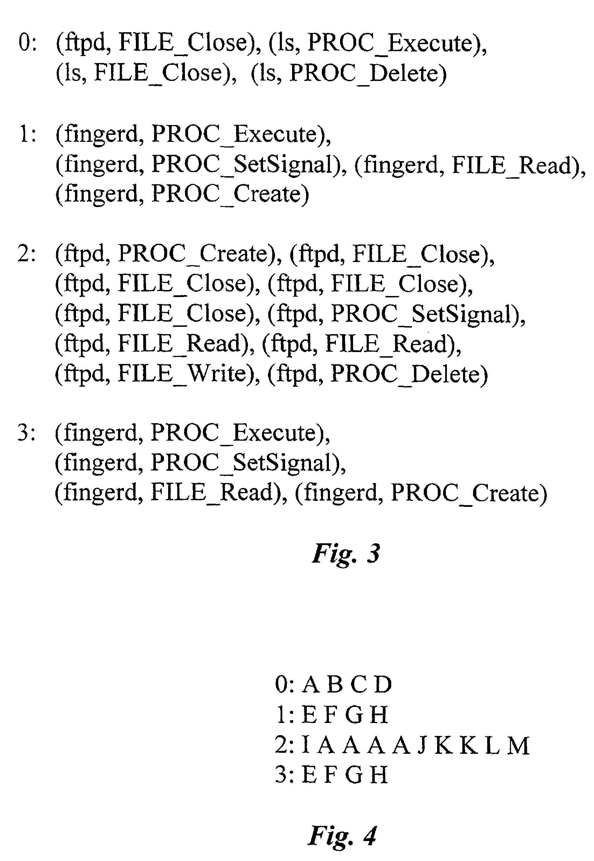

Figure 3 shows the events of Figure 2 after applying the filtering component 107.

For the further internal processing, translation component 109 translates the event sequences into an internal data representation. Each event, i.e. the tuple consisting of the process and the event name, is translated into a single character of an alphabet Σ. The output of translation component 109 are strings of characters labeled 110.

The translation is bijective, i.e. identical events are translated into the same character, and a character is the translation of identical events only. The translation rules are generated on the fly and stored in a translation table 136. Figure 4 shows the result of the translation of the event sequences into strings.

The strings can be reduced further. A reduction and aggregation component 111 performs two tasks:

- Duplicate strings are removed.
- Consecutive occurrences of the same character are aggregated into a smaller number of the same character.

The first task results in a set of unique strings. Duplicate strings do not add any value to the further processing as will be seen later.

It can be observed that subsequences of *N, N > >1,* events are quite frequent, with *N* exhibiting small variations. An example is the *ftp login* session, where the *ftp daemon* closes several file handles inherited from the *inetd* process. Since the *inetd* process is not always in the same state, the number of its file handles may vary. As a consequence, the *ftp daemon* inherits not always the same number of file handles. Closing all the unneeded file handles results therefore in a varying number of file close operations.

There are two possible ways to aggregate characters:

- The identical consecutive characters are replaced with an extra, not yet used character.
- The *N* identical consecutive characters are comprised into *M, 1 <= M <= N,* characters.

The first approach increases the number of unique events and possibly also the number of patterns. Since the number of patterns should be kept small, the second approach with *M = 1* has been selected. The newly created strings have less semantics than the original ones, but no case is known where the character aggregation impacts the operation of the intrusion detection system.

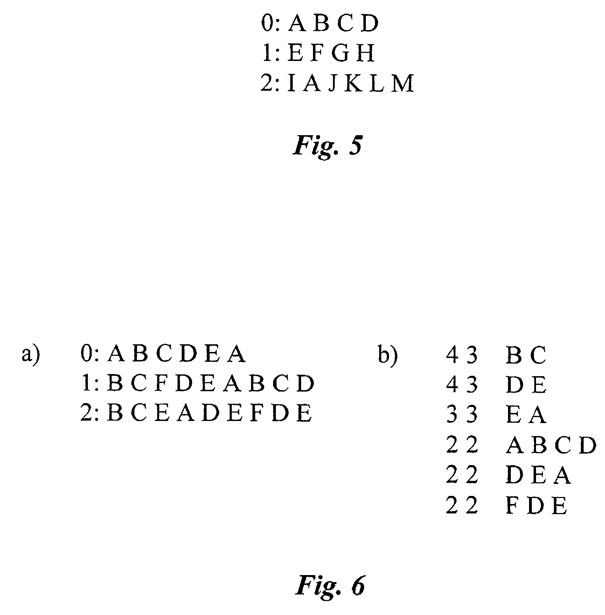

The output of the reduction and aggregation component 111 are unique strings, labeled 112, where consecutive occurrences of the same character are removed. Figure 5 shows the strings of Figure 4 after being processed by reduction and aggregation component 111.

A pattern extraction component 113 determines the patterns which constitute the process model and stores them in a pattern table 135. The algorithms used to build pattern table 135 are explained in detail in subsequent sections.

Pattern table 135 is a key part of the intrusion detection system according to the invention. It links the off-line system 102 with the on-line system 122.

The on-line part has nearly the same components as the off-line part. However, a main difference is that the process to be examined is not under control of the intrusion detection system. In on-line system 122, the event recording component 125 and the process filtering component 127 are the same as in the off-line system. The translation component 129 is different with respect to the fact that audit events are translated based on the entries retrieved from a translation table 134. If there is an event for which no entry in translation table 129 exists, the event is translated to a dummy character. For each event sequence, it has to be decided whether there is a sign of an intrusion or not. Therefore, there is no reduction component (like component 111 in the off-line part) that removes duplicate sequences as in the training system. There is only an aggregation component 131.

The pattern matching component 133 receives its input strings 132 from the aggregation component 131. By applying the algorithm described in the subsequent section of this description, it is tried to match all the input strings with the patterns of pattern table 135. However, there may be strings that remain with uncovered characters. Depending on the number of consecutively uncovered characters, it is decided whether there is an indication of an intrusion, and whether an alarm 136 has to be issued.

For the *ftp daemon*, a threshold of 6 characters was selected, i.e. if there are 7 subsequent uncovered characters, an alarm is issued.

### 2. Algorithms

In this section, a sample algorithm to build the pattern table and a sample algorithm to cover the input stream are described. They represent the best algorithms we know so far. However, we can think of variations of these algorithms. For example, the algorithm to build the pattern table sorts the patterns based on the number of characters they can cover at the beginning and end of an input string. We can think of other sort criteria like the total number of characters covered by a pattern or the number of occurrences of a pattern.

### 2.1 Terminology and Notation

Consider a finite set of characters $\Sigma = \{c_1,$ $c_2, ..., c_n\}$. The set $\Sigma$ is called an alphabet. To denote a string of $n$, $n > 0$, identical consecutive characters $c \in \Sigma$, we write $c^n$. The term $c^*$ denotes a string of identical consecutive characters of arbitrary length $l$, $l >= 0$. The term $c^+$ denotes a string of identical consecutive characters of arbitrary length $m$, $m > 0$. To denote an arbitrary string of length $n$, $n > 0$, we write $\{.\}^n$. $\{.\}^*$ denotes an arbitrary string of arbitrary length $l$, $l >= 0$, and $\{.\}^+$ denotes an arbitrary string of length $m$, $m > 0$.

The length of a string $s$ is written as $|s|$. We write $c \in s$ if the character $c$ is contained in the string $s$.

Given is a set of strings $S = \{s_1, s_2, ..., s_n\}$ over the alphabet $\Sigma$. A substring $p$ that

- occurs at least twice in the set of strings $S$, and
- has a length $|p|$ of two or more characters

is called a pattern.

$p^n$ denotes the pattern $p$ repeated $n$, $n > 0$, times. $p^*$ denotes the pattern $p$ repeated $l$, $l >= 0$, times, and $p^+$ denotes the pattern $p$ repeated $m$, $m > 0$, times.

A pattern $p$ is maximal, if there is no pattern $q$ for which holds:

- $p$ is a substring of $q$ with $|p| < |q|$, and
- the number of occurrences of the pattern $q \in S$ is equal or larger than the number of occurrences of the pattern $p \in S$.

A character $c \in s$ is said to be covered by the pattern $p$, if $c \in p$ and $p$ is a substring of $s$.

A string $s$ is said to be covered by a set of patterns $P$, if for each character $c$, $c \in s$, there is a pattern $p$, $p \in P$, so that $c$ is covered by $p$.

A set of strings $S$ is said to be covered by a set of patterns $P$, if each string $s$, $s \in S$, is covered by $P$. Additionally, $P$ is said to cover $S$.

Given are a pattern $p$ and a string $s$. Let us decompose the string $s$ as follows:

$$s = p^1 \{.\}^* p^r \; l, r >= 0$$

It is assumed that the decomposition is maximal, i.e. there are no $l'$ and $r'$ for which holds $l'+r'>l+r$.

The expression $(l + r) \cdot |p|$, i.e. the sum $l + r$ times the pattern length $|p|$, is called margin cover of the pattern $p$ and the string $s$. It is written as $mCover(p,s)$. The margin cover of a pattern $p$ and a string set $S = \{s_1, s_2, ..., s_n\}$, written as $mCover(p,S)$, is defined as

$$\sum_{i=1}^{n} mCover(p,s_i).$$

The total cover of a pattern $p$ and a string set $S$, $tCover(p,S)$ is the total number of characters that can be covered by the pattern **p**.

### 2.2 Determining the Set of Maximal Variable-Length Patterns

In a first step, all maximal patterns contained in the set **S** of input strings have to be determined. For this purpose, the Teiresias algorithm, as described by I. Rigoutsos and A. Floratos in "Combinatorial Pattern Discovery in Biological Sequences - The TEIRESIAS Algorithm" in BioInformatics, pp. 55-67, Vol. 14, No. 1, 1998, is used. A minimal pattern length **m** can be specified as argument for the Teiresias algorithm. The Teiresias algorithm will then only find the maximal patterns whose length is equal to or greater than this given minimal length.

Part a) of Figure 6 shows a sample input set of 3 strings and part b) shows the corresponding pattern set as discovered by the Teiresias algorithm (with **m** = 2). For each pattern, the total number of occurrences (first column) as well as the number of strings in which it occurs (second column) is given.

### 2.3 Reducing the Set of Patterns

Out of the set of patterns **P** consisting of all the maximal patterns found for the string set **S**, a subset of patterns **R, R ⊂ P**, is selected which covers **S**. As an example, the following algorithm can be used to build the reduced pattern set **R**.

1. Let **m** denote the minimal pattern length that was used to generate the set of maximal variable-length patterns. Add each **s, s ∈ S ∧ |s| <2 · m**, to **P** and remove it from **S**.
2. If **P** = Ø, then add all s ∈ **S** to the reduced pattern set **R** and exit.
3. For each **p ∈ P** calculate **mCover(p,S)**.
4. If there is a pattern **p** fulfilling **mCover(p,S) > 0**, then select a pattern **r** for which **mCover(r,S)** is maximal, i.e. there is no pattern **q** for which holds:

$$mCover(q,S) > mCover(r,S) \text{ or}$$

$$mCover(q,S) = mCover(r,S) \wedge |q| > |r|.$$

5. Add **r** to the reduced pattern set **R** and remove it from **P**.
6. Remove first all the matching substrings adjacent to the beginning and end of a string, i.e. remove strings of the form **s = r⁺**, and replace strings of the form **s = r⁺s'** or **s = r⁺s''** with **s'** or **s''**, respectively.
7. Remove then the matching substrings that are not adjacent to the beginning and end of a string, i. e. as long as there is a **s ∈ S, s = s'r⁺s'' = {.}ᵛ {.} *r+{.} *{.}ʷ, m** being the minimal pattern length and

**v,w > 0**, replace s with the two strings **s'** and **s''. v** and **w** specify the minimal length of the resulting new strings **s'** and **s''**, respectively. Setting them equal to **m** enforces that all patterns have a minimal length **m**. However, different settings are possible.
8. If one of the strings **s** that have been newly added to **S** has a length **|s| < 2·m, m** being the minimal pattern length, remove s from the set of strings **S** and add it to the set of patterns **P**.
8. If **S ≠ Ø**, go to step 2.

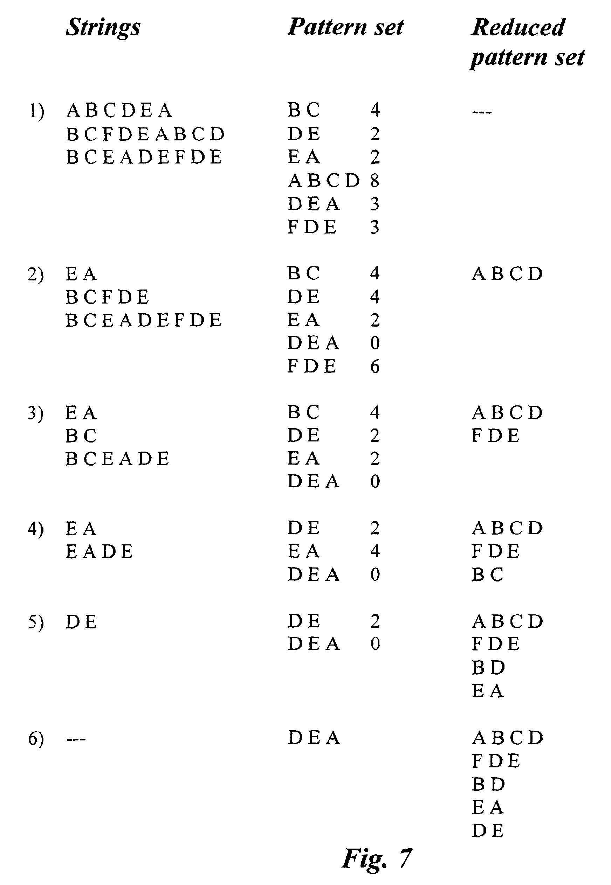

Figure 7 illustrates the pattern reduction algorithm applied to the sample string set introduced in Figure 6. For each reduction step, the string set, the pattern set, and the reduced pattern set are shown. For each pattern in the pattern set, its **mCover** value is listed. The pattern with the highest **mCover** value is moved to the reduced pattern set, and matching substrings are removed from the string set. In this example, not all patterns are needed to cover all the strings.

In the example of the *ftp daemon*, the Teiresias algorithm determines about 600 maximal variable-length patterns. After applying the reduction algorithm, about 50 patterns remain.

### 2.4 Pattern Matching

We describe a sample pattern matching algorithm. The algorithm tries to match the input stream by concatenating patterns, i.e. the patterns are placed one right after the other. A variation would be to allow overlapping patterns.

At certain points of the pattern matching process, there may be several patterns that match the input stream and it has to be decided which pattern to select. As an heuristic, a pattern is selected if a sequence of **d, d > 0,** patterns can be found that matches the input stream right after the pattern under consideration.

1. Set the counter of consecutively uncovered characters, **u**, to **0**.
2. Wait until there are at least **k = d·|p_{mean}|** characters in the input stream where **d** is the parameter as explained in the introduction to this algorithm and **|p_{mean}|** is the mean length of all patterns **p ∈ P**, or until the end of an input sequence has been reached.
3. Find a pattern **p ∈ P** that covers the beginning of the input stream **T.** If no pattern can be found, go to step 6.
4. Find **d > 0** patterns **q_1, q_2, ..., q_d**, so that the string **t = pq_1q_2...q_d** covers the beginning of the stream. If there are **e** patterns **q_1, q_2, ..., q_e, 0 < e < d**, that cover the whole input sequence, set **t = pq_1q_2...q_e**.

   (a) If **t** matches the whole input sequence, remove the input sequence and go to step 1.
   (b) If **d** patterns can be found covering the beginning of the input stream, remove the pattern *p* from the input stream and go to step 1.

5. Determine all pattern combinations that cover the beginning of the input stream. Select the pattern combination that covers the longest character sequence, remove it from the input stream, and go to step 1.
6. Skip one character and increase *u* by *1.*
7. If *u = n + 1, n* being the threshold for the number of consecutively uncovered characters, raise an alarm.
8. Go to step 2.

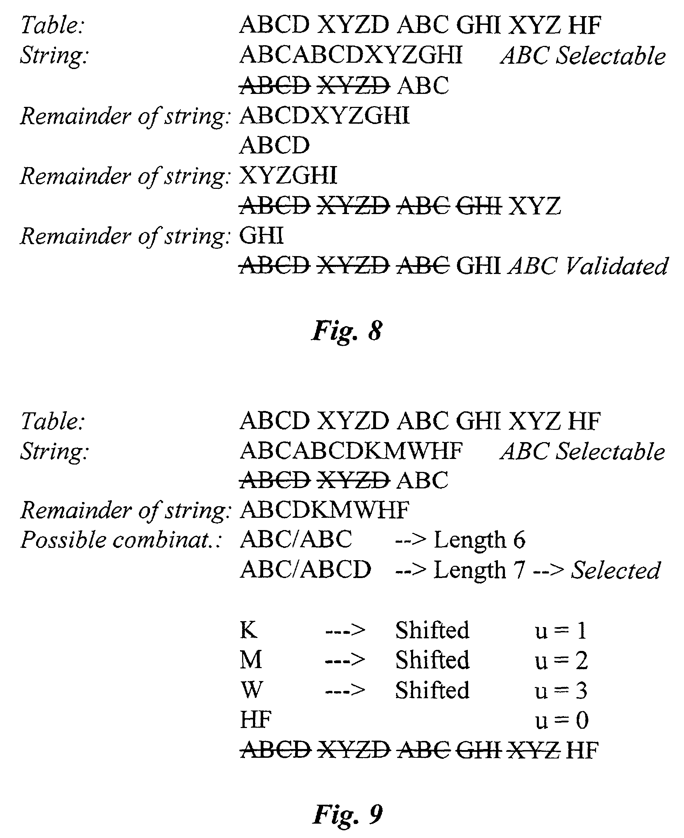

Figures 8 and 9 are two illustrations of the pattern matching algorithm. One for the case of a fully-covered string, one for the case of a partially-covered string.

The pattern matching algorithm processes the pattern table found on top of Figures 8 and 9. In Figure 8, the matching algorithm first finds the pattern "ABC" matching the beginning of the sample string. Before accepting this pattern as a valid match, the pattern "ABC" must be validated be finding *d=3* patterns matching the remainder "ABCDXYZGHI" of the string. Since such three patterns can be found, namely "ABCD", XYZ", and "GHI", the pattern "ABC" is accepted and deleted from the sample string. Processing continues with the string "ABCDXYZGHI".

In Figure 9, we have again the same pattern table as in Figure 8. However, the sample string to be matched is somewhat different. Again, the pattern "ABC" is selected as candidate to match the beginning of the sample string. However, we cannot find *d=3* patterns that match the remainder "ABCDKMWHF" of the string. This implies that another pattern that matches the beginning of the sample string should be tried. Since there is no such other pattern, the pattern sequence has to be found that matches the longest portion of the sample string. Because the two pattern "ABC" and "ABCD" match the longest subsequence, they are selected. The characters "KMW" cannot be matched and are skipped. Processing continues with the string "HF".

A pattern-oriented, behavior-based, variable-length intrusion detection model was defined. The main advantage of this inventive model is that it generates a kind of "natural" patterns or signatures of the process to be monitored, which patterns very well represent the "normal" behavior. Thus, deviations - which indicate intrusion or misuse - can be easier detected than with previously known methods.

While the present invention has been particularly shown with reference to one specific embodiment, it is obvious to someone skilled in the art that it can be adapted to match the environment in which it is going to be used, whether for the detection of unauthorized transactions in the banking arena, of viruses in a computer network, of unauthorized entry to buildings with restricted access, or of unallowed data exchange between data bases, to name a few.

**Claims**

1. A method for detecting intrusion attempts in a computer or computer system, said method comprising in combination:

   - in a training mode, building a table of characteristic, process-constituting patterns defining normal behavior of a model process in said computer or computer system by performing the following steps:

     • building a first event sequence by filtering a first event stream generated by said model process,

     • by using the so-called Teiresias algorithm, extracting event sequence patterns from said first event sequence, said patterns constituting said model process,

     • storing said process-constituting patterns; and

   - in an operation mode, extracting characteristic patterns from an actual process by performing the following steps:

     • building a second event sequence by filtering an event stream generated by said actual process,

     • matching said second event sequence with said stored process-constituting patterns, and

     • indicating the result of said matching step.

2. The method for intrusion detection according to claim 1, wherein

   • in the training mode, the first event sequence is translated and the rules used for said translation are stored,

   • in the operation mode, the second event sequence is translated using said stored translation rules.

3. The method for intrusion detection according to claim 2, wherein the translation is a dynamic, on-the-fly translation.

4. The method for intrusion detection according to any of the claims 1 to 3, wherein

- in the training mode, the first event sequence is compressed according to a given set of aggregation rules,

- in the operation mode, the second event sequence is compressed using said given set of aggregation rules.

5. The method for intrusion detection according to one or more of the preceding claims, wherein

- an event stream generated by either one or both of the processes is recorded and

- said recorded event stream filtered to build the first and/or second event sequence.

6. The method for intrusion detection according to one or more of the preceding claims, wherein the process-constituting patterns of the first event sequences contain patterns of varying lengths, in particular patterns of maximal lengths.

7. The method for intrusion detection according to one or more of the preceding claims, further including a reduction step in the training mode, whereby any duplications in the obtained event sequence are removed.

8. The method for intrusion detection according to one or more of the preceding claims, wherein the training mode is carried out under the control of the intrusion detection system.

9. The method for intrusion detection according to one or more of the claims 2 to 7, wherein all or part of the method steps are applied in the following sequences

- in the training mode:

    1. event recording,

    2. process filtering,

    3. translation and storage of translation rules,

    4. reduction and aggregation,

    5. pattern extraction and storage; and

- in the operation mode:

    1. event recording,

    2. process filtering,

    3. translation based on stored translation rules,

    4. aggregation,

    5. pattern matching with stored patterns.

10. An apparatus for detecting intrusion attempts in a computer or computer system, said apparatus comprising in combination:

- a first filtering component (107) for filtering, in a training mode branch, a first event stream generated by a model process (103) and building a first event sequence (108),

- a pattern extraction component (113) extracting event sequence patterns from said first event sequence by using the so-called Teiresias algorithm, said patterns constituting said model process,

- a pattern table component (135) storing said extracted, process-constituting patterns defining normal behavior of said model process,

- a second filtering component (127) for building, in an operation mode branch, a second event sequence by filtering an event stream generated by an actual process (123),

- a pattern matching component (133) for matching said second event sequence with said process-constituting patterns stored in said pattern table component (135), and

- an indicator component (136) for indicating the output of said matching component (133).

11. The apparatus for intrusion detection according to claim 10, further comprising

- a first translation component (109) which, in the training mode branch, translates the first event sequence,

- a translation table (134) for storing the translation rules used for said translation,

- a second translation component (129) which, in the operation mode branch, translates the second event sequence, using said translation rules stored in said translation table (134).

12. The apparatus for intrusion detection according to any of the claims 10 and 11, further comprising

- a first compression component (111) which, in the training mode branch, compresses the first event sequence according to a given set of aggregation rules, and

- a second compression component (131) which, in the operation mode branch, compresses the second event sequence using said given set of aggregation rules.

13. The apparatus for intrusion detection according to claim 12, further comprising a reduction component for removing duplicates in the event sequence obtained in the training mode branch, in particular a reduction component combined with the first compression component (111).

14. The apparatus for intrusion detection according to one or more of the claims 10 to 13, wherein all or part of the components are arranged in the following working sequences

- in the training mode branch:

  1. event recording component (105),

  2. process filtering component (107),

  3. translation component (109) and translation table (134),

  4. reduction and aggregation component (111),

  5. pattern extraction component (113) and pattern table (135); and

- in the operational mode branch:

  1. event recording component (125),

  2. process filtering component (127),

  3. translation component (129), connected to said translation table (134),

  4. aggregation component (131),

  5. pattern matching component (133), connected to said pattern table (135).

15. The apparatus for intrusion detection according to one or more of the preceding claims, wherein all or part of the components are arranged such that, to avoid duplication, they can be used alternatively either in the training mode branch or the operation mode branch.

**Patentansprüche**

1. Verfahren zur Detektion von Eindringversuchen in einem Rechner oder einem Rechnersystem, wobei das Verfahren eine Kombination der folgenden Modi und Schritte umfasst:

   - einen Trainingsmodus, in dem eine Tabelle charakteristischer, den Prozess darstellender Muster, die das normale Verhalten eines Modellprozesses in dem Rechner oder dem Rechnersystem definieren, durch Ausführen der folgenden Schritte erstellt wird:

     • Erstellen einer ersten Ereignissequenz durch Filtern eines ersten durch den Modellprozess generierten Ereignisdatenstroms,

     • Verwenden des so genannten Teiresias-Algorithmus zum Extrahieren von Ereignissequenzmustern aus der ersten Ereignissequenz, wobei die Muster den Modellprozess darstellen,

     • Speichern der den Prozess darstellenden Muster; und

   - einen Betriebsmodus, in dem aus einem realen Prozess charakteristische Muster durch Ausführen der folgenden Schritte extrahiert werden:

     • Erstellen einer zweiten Ereignissequenz durch Filtern eines durch den realen Prozess generierten Ereignisdatenstroms,

     • Vergleichen der ersten Ereignissequenz mit den gespeicherten, den Prozess darstellenden Mustern und

     • Anzeigen des Ergebnisses des Vergleichsschrittes.

2. Verfahren zur Eindringdetektion nach Anspruch 1, wobei

   • die erste Ereignissequenz im Trainingsmodus umgesetzt wird und die bei der Umsetzung angewendeten Regeln gespeichert werden,

   • die zweite Ereignissequenz im Betriebsmodus unter Verwendung der gespeicherten Umsetzungsregeln umgesetzt wird.

3. Verfahren zur Eindringdetektion nach Anspruch 2, wobei die Umsetzung eine dynamische Umsetzung ist und während der Verarbeitung stattfindet.

**4.** Verfahren zur Eindringdetektion nach einem der Ansprüche 1 bis 3, wobei

- die erste Ereignissequenz im Trainingsmodus nach einem vorgegebenen Satz von Komprimierungsregeln komprimiert wird,

- die zweite Ereignissequenz im Betriebsmodus unter Verwendung des vorgegebenen Satzes von Komprimierungsregeln komprimiert wird.

**5.** Verfahren zur Eindringdetektion nach einem oder mehreren der vorangehenden Ansprüche, wobei

- ein durch einen oder beide Prozesse generierter Ereignisdatenstrom aufgezeichnet und
- der aufgezeichnete Ereignisdatenstrom gefiltert wird, um die erste und/oder zweite Ereignissequenz zu erstellen.

**6.** Verfahren zur Eindringdetektion nach einem oder mehreren der vorangehenden Ansprüche, wobei die den Prozess darstellenden Muster der ersten Ereignissequenzen Muster variabler Länge, insbesondere Muster maximaler Längen, enthalten.

**7.** Verfahren zur Eindringdetektion nach einem oder mehreren der vorangehenden Ansprüche, welches im Trainingsmodus ferner einen Reduzierungsschritt enthält, durch den alle doppelten Muster aus der erhaltenen Ereignissequenz entfernt werden.

**8.** Verfahren zur Eindringdetektion nach einem oder mehreren der vorangehenden Ansprüche, wobei der Trainingsmodus unter Kontrolle des Systems zur Eindringdetektion erfolgt.

**9.** Verfahren zur Eindringdetektion nach einem oder mehreren der Ansprüche 2 bis 7, wobei alle oder einige der Verfahrensschritte in den folgenden Sequenzen ausgeführt werden, und zwar

- im Trainingsmodus:

1. Aufzeichnen des Ereignisses,
2. Filtern des Prozesses,
3. Umsetzen und Speichern der Umsetzungsregeln,
4. Reduzieren und Komprimieren,
5. Extrahieren und Speichern der Muster; und

- im Betriebsmodus:

1. Aufzeichnen des Ereignisses,
2. Filtern des Prozesses,
3. Umsetzen auf Basis der gespeicherten Umsetzungsregeln,

4. Komprimieren,
5. Vergleichen der Muster mit den gespeicherten Mustern.

**10.** Vorrichtung zur Detektion von Eindringversuchen in einem Rechner oder einem Rechnersystem, wobei die Vorrichtung eine Kombination der folgenden Komponenten umfasst:

- eine erste Filterkomponente (107) zum Filtern eines durch einen Modellprozess (103) generierten ersten Ereignisdatenstroms in einem Zweig des Trainingsmodus und zum Erstellen einer ersten Ereignissequenz (108),

- eine Musterextrahierungs-Komponente (113) zum Extrahieren von Ereignissequenzmustern aus der ersten Ereignissequenz unter Verwendung des so genannten Teiresias-Algorithmus, wobei die Muster den Modellprozess darstellen,

- eine Mustertabellen-Komponente (135) zum Speichern der den Prozess darstellenden extrahierten Muster, welche das normale Verhalten des Modellprozesses definieren,

- eine zweite Filterkomponente (127) zum Erstellen einer zweiten Ereignissequenz in einem Zweig des Betriebsmodus durch Filtern eines durch einen realen Prozess (123) generierten Ereignisdatenstroms,

- eine Mustervergleichs-Komponente (133) zum Vergleichen der zweiten Ereignissequenz mit den in der Mustertabellen-Komponente (135) gespeicherten, den Prozess darstellenden Muster, und

- eine Anzeigekomponente (136) zum Anzeigen des Ausgabewertes der Vergleichskomponente (133).

**11.** Vorrichtung zur Eindringdetektion nach Anspruch 10, die ferner Folgendes umfasst:

- eine erste Umsetzungskomponente (109), die im Zweig des Trainingsmodus die erste Ereignissequenz umsetzt,

- eine Umsetzungstabelle (134) zum Speichern der beim Umsetzen angewendeten Umsetzungsregeln,

- eine zweite Umsetzungskomponente (129), die im Zweig des Betriebsmodus die zweite Ereignisdatenfolge unter Anwendung der in der Umsetzungstabelle (134) gespeicherten Umsetzungsregeln umsetzt.

**12.** Vorrichtung zur Eindringdetektion nach einem der Ansprüche 10 und 11, wobei die Vorrichtung ferner Folgendes umfasst:

- eine erste Komprimierungskomponente (111), die im Zweig des Trainingsmodus die erste Ereignissequenz gemäß einem vorgegebenen Satz von Komprimierungsregeln komprimiert, und

- eine zweite Komprimierungskomponente (131), die im Zweig des Betriebsmodus die zweite Ereignissequenz unter Anwendung eines vorgegebenen Satzes von Komprimierungsregeln komprimiert.

**13.** Vorrichtung zur Eindringdetektion nach Anspruch 12, wobei die Vorrichtung ferner eine Reduzierungskomponente zum Entfernen doppelter Muster aus der im Zweig des Trainingsmodus erhaltenen Ereignissequenz und insbesondere eine Reduzierungskomponente in Kombination mit der ersten Komprimierungskomponente (111) umfasst.

**14.** Vorrichtung zur Eindringdetektion nach einem oder mehreren der Ansprüche 10 bis 13, wobei alle oder einige der Komponenten in den folgenden Arbeitssequenzen angeordnet sind:

- im Zweig des Trainingsmodus:

  1. Ereignisaufzeichnungs-Komponente (105),
  2. Prozessfilter-Komponente (107),
  3. Umsetzungskomponente (109) und Umsetzungstabelle (134),
  4. Reduzierungs- und Komprimierungskomponente (111),
  5. Musterextrahierungs-Komponente (113) und Mustertabelle (135); und

- im Zweig des Betriebsmodus:

  1. Ereignisaufzeichnungs-Komponente (125),
  2. Prozessfilter-Komponente (127),
  3. mit der Umsetzungstabelle (134) verbundene Umsetzungskomponente (129)
  4. Komprimierungskomponente (131),
  5. mit der Mustertabelle (135) verbundene Mustervergleichs-Komponente (133).

**15.** Vorrichtung zur Eindringdetektion nach einem oder mehreren der vorangehenden Ansprüche, wobei die Komponenten in der Vorrichtung so angeordnet sind, dass diese zur Vermeidung von Duplikaten alternativ entweder im Zweig des Trainingsmodus oder im Zweig des Betriebsmodus eingesetzt werden können.

## Revendications

**1.** Un procédé de détection des tentatives d'intrusion dans un ordinateur ou un système d'ordinateur, ledit procédé comprenant, en combinaison :

- 1en un mode d'apprentissage, la construction d'une table de caractéristiques, en constituant, par un processus, des motifs définissant le comportement normal d'un processus de modélisation dans l'ordinateur ou ledit système d'ordinateur, en exécutant les étapes suivantes :

  . construction d'une première séquence d'événements, par filtrage d'un premier flux d'événements généré par ledit processus de modélisation,

  . par utilisation ce que l'on appelle l'algorithme de Teiresias, extraction des motifs de séquence d'événements de ladite première séquence d'événements, lesdits motifs constituant ledit processus de modélisation,

  . stockage desdits motifs constituant le processus ; et

- 2en un mode opérationnel, extraire des motifs de caractéristique d'un processus réel, en exécutant les étapes suivantes :

  . construction d'une deuxième séquence d'événements par filtrage d'un flux d'événements généré par ledit processus réel,

  . mise en coïncidence de ladite deuxième séquence d'événements avec lesdits motifs constituant le processus, ayant été stockés, et

  . indiquer le résultat de ladite étape de mise en coïncidence.

**2.** Le procédé de détection d'intrusion selon la revendication 1, dans lequel :

  . en mode d'apprentissage, la première séquence d'événements est traduite et les règles utilisées pour ladite traduction sont stockées,

  . en mode opérationnel, la deuxième séquence d'événements est traduite en utilisant lesdites règles de traduction stockées.

3. Le procédé de détection d'intrusion selon la revendication 2, dans lequel la traduction est une traduction dynamique, au vol.

4. Le procédé de détection d'intrusion selon l'une quelconque des revendications 1 à 3, dans lequel :

   . en mode d'apprentissage, la première séquence d'événements est comprimée selon un jeu donné de règles d'agrégation,

   . en mode fonctionnel, la deuxième séquence d'événements est comprimée en utilisant ledit jeu donné de règles d'agrégation.

5. Le procédé de détection d'intrusion selon l'une ou plusieurs des revendications précédentes, dans lequel :

   . un flux d'événements, généré par l'un ou les deux processus, est enregistré et

   . ledit flux d'événements enregistré est filtré pour construire la première et/ou la deuxième séquence d'événements.

6. Le procédé de détection d'intrusion selon l'une ou plusieurs des revendications précédentes, dans lequel les motifs constituant le processus des premières séquences d'événements contiennent des motifs de différentes longueurs, en particulier des motifs de longueurs maximales.

7. Le procédé de détection d'intrusion selon l'une ou plusieurs des revendications précédentes, comprenant en outre une étape de réduction en mode d'apprentissage, de manière à supprimer d'éventuelles duplications dans la séquence d'événements obtenue.

8. Le procédé de détection d'intrusion selon l'une ou plusieurs des revendications précédentes, dans lequel le mode d'apprentissage est effectué sous la commande du système de détection d'intrusion.

9. Le procédé de détection d'intrusion selon l'une ou plusieurs des revendications 2 à 7, dans lequel la totalité ou une partie des étapes du procédé sont appliquées dans les ordres de succession suivants :

   - 3en mode d'apprentissage :

     - 4 enregistrement d'événement,

     - 5 filtrage de processus

     - 6 traduction et stockage des règles de traduction,

     - 7 réduction et agrégation,

     - 8 extraction et stockage de motif ; et

   - 9en mode opérationnel :

     o1 enregistrement d'événement,

     o2 filtrage de processus,

     o3 traduction basée sur des règles de transaction stockées,

     o4 agrégation

     o5 mise en coïncidence des motifs avec des motifs stockés.

10. Le procédé de détection des tentatives d'intrusion dans un ordinateur ou un système d'ordinateur, ledit dispositif comprenant, en combinaison :

    . un premier composant de filtrage (107) pour filtrer, en une branche de mode d'apprentissage, un flux d'événements généré par un processus de modélisation (103), et construction d'une première séquence d'événements (108),

    . un composant d'extraction de motif (113), extrayant des motifs de séquence d'événements de ladite première séquence d'événements, par utilisation de ce que l'on appelle l'algorithme de Teiresias, lesdits motifs constituant ledit processus de modélisation,

    . un composant de table de motif (135), stockant lesdits motifs extraits, constituant les processus, définissant le comportement normal dudit processus de modélisation,

    . un deuxième composant de filtrage (127), pour construire, dans une branche de mode opérationnel, une deuxième séquence d'événements par filtrage d'un flux d'événements généré par un processus réel (123),

    . un composant de mise en coïncidence de motifs (133), pour mettre en coïncidence, ladite deuxième séquence d'événements avec lesdits motifs de constitution de processus, stockés dans ledit composant de table de motifs (135), et

. un composant indicateur (136), pour indiquer le résultat dudit composant de mise en coïncidence (133).

11. Le dispositif de détection des tentatives d'intrusion selon la revendication 10, comprenant en outre :

. un premier composant de traduction (109) qui, dans la branche de mode d'apprentissage, traduit la première séquence d'événements,

. une table de traduction (134), pour stocker les règles de transaction utilisées pour ladite traduction,

. un deuxième composant de traduction (129), qui, dans la branche de mode opérationnel, traduit la deuxième séquence d'événements en utilisant lesdites règles de transaction stockées dans ladite table de transaction (134).

12. Le dispositif de détection des tentatives d'intrusion selon l'une quelconque des revendications 10 et 11, comprenant en outre :

. un premier composant de compression (111) qui, dans la branche de mode d'apprentissage, comprime la première séquence d'événements selon un jeu donné de règles d'agrégation, et

. un deuxième composant de compression (131) qui, à la branche de mode opérationnel, comprime la deuxième séquence d'événements, par utilisation dudit jeu donné de règles d'agrégation.

13. Le dispositif de détection d'intrusion selon la revendication 12, comprenant en outre une composante de réduction, pour supprimer les doubles dans la séquence d'événements obtenue dans la branche de mode d'apprentissage, en particulier un composant de réduction combiné au premier composant de compression (111).

14. Le dispositif de détection d'intrusion selon l'une ou plusieurs des revendications 10 à 13, dans lequel la totalité ou une partie des composants sont agencés dans les séquences de travail suivantes :

- 10en branche de mode d'apprentissage :

  - 11composant d'enregistrement d'événement (105),
  - 12composant de filtrage de processus (107),
  - 13composant de traduction (109) et table de traduction (134),
  - 14composant de réduction et d'agrégation (111),
  - 15composant d'extraction de motif (113) et table de motif (135) ; et

- 16dans la branche de mode opérationnel :

  - 1. composant d'enregistrement d'événement (125),

- 17composant de filtrage de processus (127),

- 18composant de traduction (129), relié à ladite table de traduction (134),

- 19composant d'agrégation (131),

- 20composant de coïncidence de motifs (133) relié à ladite table de motif (135).

15. Le dispositif de détection d'intrusion selon l'une ou plusieurs des revendications précédentes, dans lequel la totalité ou une partie des composants sont agencés de manière que, pour éviter toute duplication, ils puissent être utilisés de façon alternée, soit dans la branche de mode d'apprentissage, soit dans la branche de mode opérationnel.

*Fig.1*

| *Process* | *Event* | *Process Id* |
|-----------|---------|--------------|
| ... | | |
| ftpd | FILE_Close | 16415 |
| ls | PROC_Execute | 16415 |
| ls | FILE_Close | 16415 |
| fingerd | PROC_Execute | 18210 |
| ls | PROC_Delete | 16415 |
| fingerd | PROC_SetSignal | 18210 |
| ftpd | PROC_Create | 18303 |
| ftpd | FILE_Close | 18303 |
| ftpd | FILE_Close | 18303 |
| ftpd | FILE_Close | 18303 |
| fingerd | FILE_Read | 18210 |
| fingerd | PROC_Create | 18210 |
| ftpd | FILE_Close | 18303 |
| ftpd | PROC_SetSignal | 18303 |
| ftpd | FILE_Read | 18303 |
| ftpd | FILE_Read | 18303 |
| ftpd | FILE_Write | 18303 |
| ftpd | PROC_Delete | 18303 |
| fingerd | PROC_Execute | 19415 |
| fingerd | PROC_SetSignal | 19415 |
| fingerd | FILE_Read | 19415 |
| fingerd | PROC_Create | 19415 |

## *Fig. 2*

0: (ftpd, FILE_Close), (ls, PROC_Execute),
   (ls, FILE_Close), (ls, PROC_Delete)

1: (fingerd, PROC_Execute),
   (fingerd, PROC_SetSignal), (fingerd, FILE_Read),
   (fingerd, PROC_Create)

2: (ftpd, PROC_Create), (ftpd, FILE_Close),
   (ftpd, FILE_Close), (ftpd, FILE_Close),
   (ftpd, FILE_Close), (ftpd, PROC_SetSignal),
   (ftpd, FILE_Read), (ftpd, FILE_Read),
   (ftpd, FILE_Write), (ftpd, PROC_Delete)

3: (fingerd, PROC_Execute),
   (fingerd, PROC_SetSignal),
   (fingerd, FILE_Read), (fingerd, PROC_Create)

## Fig. 3

0: A B C D
1: E F G H
2: I A A A A J K K L M
3: E F G H

## Fig. 4

0: A B C D
1: E F G H
2: I A J K L M

## Fig. 5

a)    0: A B C D E A
      1: B C F D E A B C D
      2: B C E A D E F D E

b)    4 3  B C
      4 3  D E
      3 3  E A
      2 2  A B C D
      2 2  D E A
      2 2  F D E

## Fig. 6

| Strings | Pattern set | | Reduced pattern set |
|---|---|---|---|
| 1) A B C D E A<br>B C F D E A B C D<br>B C E A D E F D E | B C<br>D E<br>E A<br>A B C D<br>D E A<br>F D E | 4<br>2<br>2<br>8<br>3<br>3 | --- |
| 2) E A<br>B C F D E<br>B C E A D E F D E | B C<br>D E<br>E A<br>D E A<br>F D E | 4<br>4<br>2<br>0<br>6 | A B C D |
| 3) E A<br>B C<br>B C E A D E | B C<br>D E<br>E A<br>D E A | 4<br>2<br>2<br>0 | A B C D<br>F D E |
| 4) E A<br>E A D E | D E<br>E A<br>D E A | 2<br>4<br>0 | A B C D<br>F D E<br>B C |
| 5) D E | D E<br>D E A | 2<br>0 | A B C D<br>F D E<br>B D<br>E A |
| 6) --- | D E A | | A B C D<br>F D E<br>B D<br>E A<br>D E |

**Fig. 7**

| | |
|---|---|
| *Table:* | ABCD XYZD ABC GHI XYZ HF |
| *String:* | ABCABCDXYZGHI   *ABC Selectable* |
| | ~~ABCD~~ ~~XYZD~~ ABC |
| *Remainder of string:* | ABCDXYZGHI |
| | ABCD |
| *Remainder of string:* | XYZGHI |
| | ~~ABCD~~ ~~XYZD~~ ~~ABC~~ ~~GHI~~ XYZ |
| *Remainder of string:* | GHI |
| | ~~ABCD~~ ~~XYZD~~ ~~ABC~~ GHI *ABC Validated* |

## *Fig. 8*

| | |
|---|---|
| *Table:* | ABCD XYZD ABC GHI XYZ HF |
| *String:* | ABCABCDKMWHF   *ABC Selectable* |
| | ~~ABCD~~ ~~XYZD~~ ABC |
| *Remainder of string:* | ABCDKMWHF |
| *Possible combinat.:* | ABC/ABC      --> Length 6 |
| | ABC/ABCD   --> Length 7 --> *Selected* |

| | | | |
|---|---|---|---|
| K | ---> | Shifted | u = 1 |
| M | ---> | Shifted | u = 2 |
| W | ---> | Shifted | u = 3 |
| HF | | | u = 0 |

~~ABCD~~ ~~XYZD~~ ~~ABC~~ ~~GHI~~ ~~XYZ~~ HF

## *Fig. 9*